# EUROPEAN PATENT APPLICATION

(11) **EP 4 576 295 A1**
(43) Date of publication of application: **25.06.2025**
(21) Application number: 24221944.2
(22) Date of filing: 19.12.2024
(51) Int. Cl.: H01M 10/04, H01M 50/107, H01M 50/152, H01M 50/528, H01M 50/531, H01M 50/538, H01M 50/545

(54) **BATTERY CELL**

(30) Priority: 21.12.2023 KR 20230188426; 05.01.2024 KR 20240002240; 12.04.2024 KR 20240049520
(71) Applicant: SK On Co., Ltd., Seoul 03161 (KR)
(72) Inventor: LEE, Yong Seok, 34124 Daejeon (KR); KIM, Byung Mook, 34124 Daejeon (KR); RHO, Mi So, 34124 Daejeon (KR); PARK, Kyung Tae, 34124 Daejeon (KR); PARK, Byeong Hyeon, 34124 Daejeon (KR); PARK, Jong Hun, 34124 Daejeon (KR)
(74) Representative: Prüfer & Partner mbB Patentanwälte · Rechtsanwälte

(57) **Abstract**

A battery cell of the present disclosure includes an electrode assembly in which an electrode including a flag and a separator are wound, a can accommodating the electrode assembly, a cap plate sealing the can, and a current collector disposed between the cap plate and the electrode assembly and in contact with the flag, the can, and the cap plate, respectively.

## Description

### BACKGROUND OF THE INVENTION

### 1. Field

The present disclosure relates to a secondary battery, and more specifically, to a battery cell.

### 2. Description of the Related Art

An embodiment of the present disclosure is to provide a battery cell with improved stability.

Secondary batteries may be reused multiple times by charging and discharging. The secondary batteries are widely used in various industries due to their economical and environmentally friendly characteristics. The secondary batteries may be classified into battery cells, battery modules, battery packs, and the like, depending on the unit. The battery module, the battery pack, and the like, may include multiple battery cells. In order to effectively dissipate heat of the battery cells, a method for adjusting the direction of heat movement is required. That is, the present inventors have found that the above problems may be solved by disposing the non-polar region where current does not flow at the center, the distance over which the heat moves may be shortened, the dissipation of the heat may be effectively controlled and the stability of a battery cell may be improved.

### SUMMARY OF THE INVENTION

The present disclosure may be widely applied in green technology fields such as solar power generation, wind power generation, etc. In addition, the present disclosure may be applied to eco-friendly devices such as electric vehicles, hybrid vehicles, etc., to prevent climate change by suppressing air pollution and greenhouse gas emissions.

A battery cell according to an embodiment of the present disclosure may include an electrode assembly in which an electrode including a flag and a separator are wound, a can accommodating the electrode assembly, a cap plate sealing the can, and a current collector disposed between the cap plate and the electrode assembly and in contact with the flag, the can, and the cap plate, respectively.

In an embodiment, the cap plate may include a non-polar region and a polar region located outside the non-polar region, and the current collector may be in contact with the polar region of the cap plate.

In an embodiment, the non-polar region may include an insulating material that electrically separates it from the polar region.

In an embodiment, polarity of each of the polar region and the can may be the same as polarity of the flag.

In an embodiment, the current collector may include a first plate in contact with the flag and the can, respectively, a second plate in contact with the cap plate, and a connecting part connecting the first plate and the second plate.

In an embodiment, a distance between the second plate and the electrode assembly may be greater than a distance between the first plate and the electrode assembly.

In an embodiment, at least one hole may be formed in the second plate.

In an embodiment, the second plate may include an inner circumferential part with a hole formed at center, and an outer circumferential part located outside the inner circumferential part.

In an embodiment, the cap plate may include an insulating material inserted into the hole.

In an embodiment, the battery cell may further include an electrode terminal located on an opposite side in a height direction from the cap plate.

In an embodiment, the electrode terminal may be inserted into a penetration hole of the can.

In an embodiment, the battery cell may further include an insulating gasket disposed between the can and the electrode terminal.

### BRIEF DESCRIPTION OF THE DRAWINGS

FIG. 1 is a diagram for explaining a battery cell according to an embodiment.
FIGS. 2 and 3 are diagrams for explaining an electrode assembly according to an embodiment.
FIG. 4 is a diagram for explaining a part of a battery cell according to an embodiment.
FIG. 5 is a diagram for explaining a first current collector according to an embodiment.
FIG. 6 is a diagram for explaining flow of heat within a battery cell according to an embodiment.
FIG. 7 is a diagram for explaining another part of a battery cell according to an embodiment.

### DETAILED DESCRIPTION

The structural or functional descriptions of examples disclosed in the present specification or application are merely illustrated for the purpose of explaining examples according to the technical principle of the present invention, and examples according to the technical principle of the present invention may be implemented in various forms in addition to the examples disclosed in the specification of application. In addition, the technical principle of the present invention is not construed as being limited to the examples described in the present specification or application.

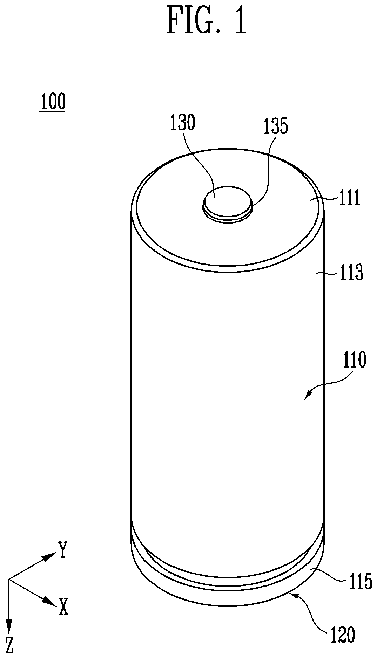

FIG. 1 is a diagram for explaining a battery cell according to an embodiment.

Referring to FIG. 1, a battery cell 100 according to an embodiment may include a can 110, a cap plate 120, an electrode assembly, and a current collector. The battery cell 100 may be a secondary battery capable of being charged and discharged multiple times. For example, the secondary battery may be one of a lithium cobalt battery, a lithium high-nickel battery, a lithium iron phosphate battery, a lithium ion battery, a lithium polymer battery, a lithium sulfur battery, a nickel hydrogen battery, a nickel cadmium battery, a sodium battery, and an all-solid-state battery, but is not limited thereto and may be transformed into various types of secondary batteries. In an embodiment, the battery cell 100 may further include an electrode terminal 130. In an embodiment, the battery cell 100 may further include an insulating gasket 135.

The can 110 may accommodate the electrode assembly. The can 110 may accommodate the current collector. For example, the can 110 may have a shape of a container with a portion open. In an embodiment, the can 110 may include a material such as various metals such as iron, aluminum, etc., alloys thereof, plastic, ceramic, or carbon.

In an embodiment, the can 110 may include a flat part 111 and a side part 113. The flat part 111 may extend from an upper end or a lower end of the side part 113. Here, each of the upper end and the lower end may be one of the end parts in a height direction (e.g., a Z-axis direction). For example, the flat part 111 may extend from the upper end of the side part 113. At least a portion of the flat part 111 may be formed as a flat surface with no height change in a horizontal direction (e.g., an X-axis direction, a Y-axis direction). The shape of the XY plane of the flat part 111 may be circular, but is not limited thereto and may be transformed into an oval, triangle, square, polygon, etc. The side part 113 may be extended in the height direction (e.g., in the Z-axis direction) from the edge of the flat part 111. In an embodiment, the flat part 111 and the side part 113 may be formed integrally or formed separately from each other.

In an embodiment, a beading part 115 may be formed in the side part 113. The beading part 115 may be a part in which the side part 113 is bent toward an inner space surrounded by the side part 113. In an embodiment, an opening part with one end open may be formed in the can 110. The opening part may be formed on the opposite side of the flat part 111 in the height direction (e.g., in the Z-axis direction). For example, when the flat part 111 is formed at the upper end of the side part 113, the opening part may be formed at the lower end of the side part 113. The electrode assembly and the current collector may be inserted into the inner space of the can 110 through the opening part. Thereafter, the beading part 115 may be formed in one region of the side part 113 adj acent to the opening part.

The cap plate 120 may seal the can 110. In an embodiment, after the electrode assembly and the current collector are accommodated in the inner space of the can 110, the cap plate 120 may be coupled to the can 110. In other words, the can 110 and the cap plate 120 may surround the outer side of the electrode assembly and the current collector. In an embodiment, the shapes of the cap plate 120 and the can 110 coupled to each other may be cylindrical. However, this is only an example, and the shapes of the cap plate 120 and the can 110 coupled to each other may be modified into various shapes such as a square or a hexahedron. In an embodiment, the cap plate 120 may be located on the opposite side of the flat part 111. For example, when the flat part 111 is formed at the upper end of the side part 113, the cap plate 120 may be coupled to the lower end of the side part 113.

In an embodiment, the current collector may include at least one of a first current collector and a second current collector. The first current collector may be disposed between the cap plate 120 and the electrode assembly. The second current collector may be disposed between the flat part 111 of the can 110 and the electrode assembly.

The current collector may be electrically connected to the electrode of the electrode assembly. To this end, the current collector may include a conductive material such as copper, gold, silver, aluminum, etc. The electrode may include a first electrode and a second electrode. In an embodiment, the first current collector and the second current collector may be electrically connected to different electrodes of the electrode assembly. For example, the first current collector may be connected to the first electrode, and the second current collector may be connected to the second electrode. In an embodiment, the first current collector may be electrically connected to the can 110 and/or the cap plate 120. The second current collector may be electrically connected to the electrode terminal 130.

In an embodiment, the electrode terminal 130 may be located on the opposite side in the height direction (e.g., in the Z-axis direction) from the cap plate 120. The electrode terminal 130 may be electrically connected to an external device. In other words, current may flow to the external device through the electrode terminal 130.

In an embodiment, the electrode terminal 130 may be inserted into a penetration hole of the can 110. In an embodiment, the electrode terminal 130 may be a rivet. In an embodiment, the penetration hole may be formed in the flat part 111 of the can 110. For example, the penetration hole may be formed by penetrating the center of the flat part 111.

In an embodiment, the insulating gasket 135 may be disposed between the can 110 and the electrode terminal 130. For example, the insulating gasket 135 may be disposed between the flat part 111 of the can 110 and the electrode terminal 130. The insulating gasket 135 may include an insulating material. The insulating material may include a material having low electrical conductivity, such as polymer, ceramic, etc.

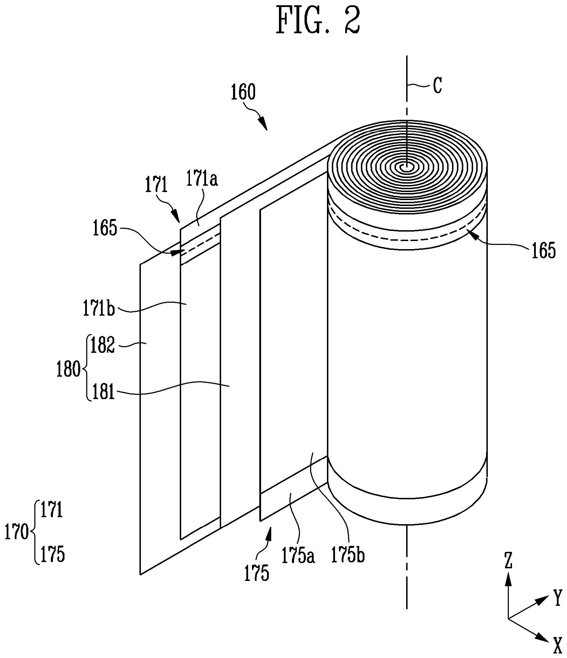

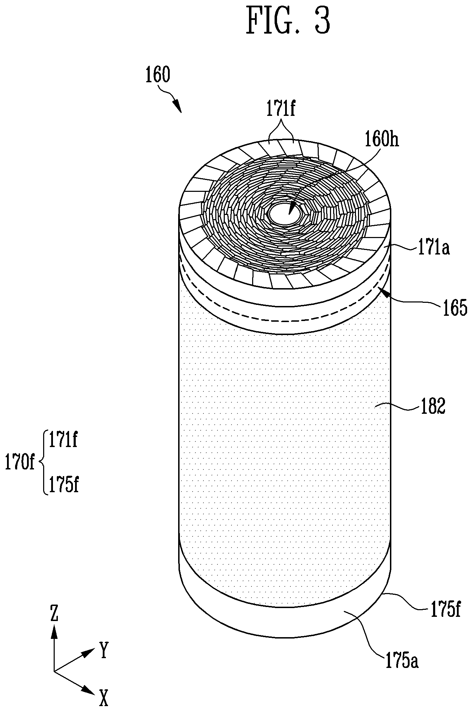

FIGS. 2 and 3 are diagrams for explaining an electrode assembly according to an embodiment.

FIG. 2 is a partially disassembled view of a wound electrode assembly, and FIG. 3 illustrates an electrode assembly in which a flag is formed.

Referring to FIGS. 2 and 3, an electrode assembly 160 according to an embodiment may include an electrode 170 and a separator 180.

The electrode 170 may include a first electrode 171 and a second electrode 175. The first electrode 171 and the second electrode 175 may have different polarities. For example, the first electrode 171 may be an anode and the second electrode 175 may be a cathode. For another example, the first electrode 171 may be a cathode and the second electrode 175 may be an anode.

The electrode 170 may be a plate on which an active material is applied to one region. In an embodiment, the first electrode 171 may include a first uncoated part 171a on which a first active material is not applied, and a first coated part 171b on which the first active material is applied. The second electrode 175 may include a second uncoated part 175a on which a second active material is not applied, and a second coated part 175b on which the second active material is applied. In an embodiment, the first uncoated part 171a may be formed at an upper end of the first coated part 171b. The second uncoated part 175a may be formed at a lower end of the second coated part 175b. When the first electrode 171 is an anode, the first active material may be an anode active material. When the second electrode 175 is a cathode, the second active material may be a cathode active material. The cathode active material may include at least one of materials such as a lithium transition metal oxide, a nickel-cobalt-manganese lithium oxide, etc. The anode active material may include at least one of materials such as a carbon material, lithium, a lithium metal compound, silicon, a silicon compound, tin, a tin compound, etc. Meanwhile, the above-described embodiment is only an embodiment, and the cathode active material and the anode active material may be modified and implemented without limitation in type.

In an embodiment, the electrode 170 may further include an insulating coating part 165 formed at the boundary between the uncoated part and the coated part. The insulating coating part 165 may include an insulating material. The insulating coating part 165 may improve the mechanical strength of the portion that is bent in the uncoated part to form a flag 170f.

The separator 180 may include an inner separator 181 disposed between the first electrode 171 and the second electrode 175, and an outer separator 182 disposed on the outside. The separator 180 may include an insulating material. The separator 180 may block contact between the first electrode 171 and the second electrode 175, and electrically isolate the first electrode 171 and the second electrode 175.

The electrode assembly 160 may be wound. In an embodiment, the electrode 170 and the separator 180 may be wound along the central axis (C) in a laminated state. Here, the central axis (C) may be in the height direction (e.g., the Z-axis direction). For example, the outer separator 182, the first electrode 171, the inner separator 181, and the second electrode 175 may be wound along the central axis (C) in a laminated state.

The electrode 170 may include a flag 170f. In an embodiment, the flag 170f may be defined as a region from a bent portion to an end portion when a portion of the uncoated part is bent. In an embodiment, the uncoated part may be bent at an angle of 90 degrees or less with respect to the XY plane. In an embodiment, the uncoated part may be notched into a plurality of segments. The plurality of segments may be bent in the order of segments located inside to segments located outside among the plurality of segments.

The flag 170f may include a first flag 171f and a second flag 175f. For example, the first flag 171f may be formed by bending the first uncoated part 171a of the first electrode 171 in an inward direction toward the central axis (C). The second flag 175f may be formed by bending the second uncoated part 175a of the second electrode 175 in an inward direction toward the central axis (C).

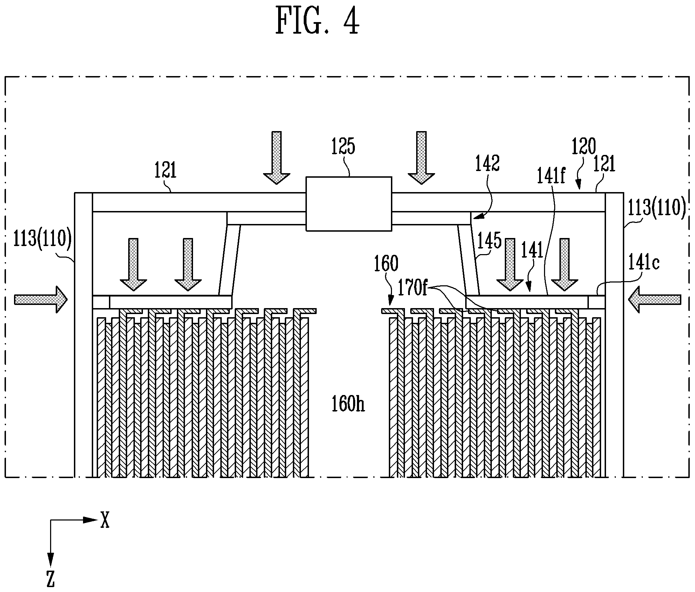

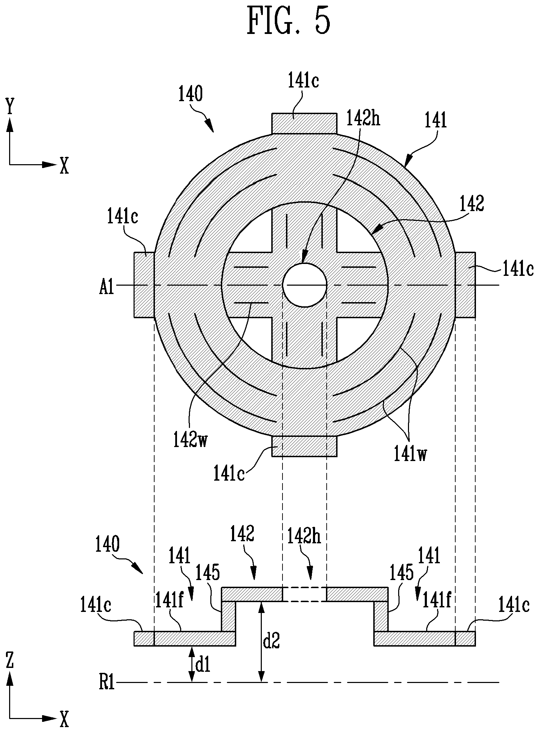

FIG. 4 is a diagram for explaining a part of a battery cell according to an embodiment. FIG. 5 is a diagram for explaining a first current collector according to an embodiment. FIG. 5 illustrates a plan view of the XY plane for the first current collector, and a cross-sectional view of the XZ plane for portion A1.

Referring to FIGS. 1 and 4, a battery cell 100 according to an embodiment may include a can 110, a cap plate 120, a first current collector 140, and an electrode assembly 160. The electrode assembly 160 may be wound along a central axis. A central hole 160h may be formed in the central axis of the electrode assembly 160. In the central axis of the electrode assembly 160, a central hole 160h may be formed. The electrode assembly 160 may include a separator and an electrode. The electrode may include a flag 170f. In an embodiment, the battery cell 100 may further include an electrolyte. The electrolyte may be, for example, a medium that transmits ions or current between the cathode and anode of the electrode assembly 160.

Referring to FIGS. 4 and 5, the first current collector 140 may be disposed between the cap plate 120 and the electrode assembly 160. For example, the first current collector 140 may be disposed below the cap plate 120 and above the electrode assembly 160.

The first current collector 140 may be in contact with (or connected to) the flag 170f, the can 110, and the cap plate 120, respectively. For example, the first current collector 140 may be welded to the flag 170f, the can 110, and the cap plate 120, respectively. In an embodiment, the first current collector 140 may be welded while in contact with the flag 170f, the can 110, and the cap plate 120, respectively. At this time, various welding methods such as laser welding, resistance welding, ultrasonic welding, etc., may be performed.

The first current collector 140 according to an embodiment may include a first plate 141, a second plate 142, and a connecting part 145. The first plate 141, the second plate 142, and the connecting part 145 may be electrically connected to each other.

The first plate 141 may be in contact with (or connected to) the flag 170f and the can 110, respectively. For example, the first plate 141 may be welded to the flag 170f and the can 110, respectively. In an embodiment, the first plate 141 may include a flag contact part 141f and a can contact part 141c. For example, in a state where a lower end of the flag contact part 141f is in contact with an upper end of the flag 170f, an upper end of the flag contact part 141f may be melted and solidified, so that the flag contact part 141f and the flag 170f may be welded. In a state where the outer end of the can contact part 141c is in contact with the inner end of a side part 113 of the can 110, the inner end of the side part 113 may be melted and solidified, so that the can contact part 141c and the side part 113 of the can 110 may be welded. In an embodiment, referring also to FIG. 1, a beading part 115 may be formed on the side part 113 of the can 110. In this case, the can contact part 141c may be welded in a state of being in contact with the beading part 115. As another example, the can contact part 141c may be welded in a state of being in contact with an area of the side part 113 located at an upper end or a lower end of the beading part 115.

The first plate 141 may be electrically connected to the flag 170f of the electrode 170. For example, referring to FIGS. 2 and 3 together, the first plate 141 may be electrically connected to the first flag 171f of the first electrode 171. In an embodiment, the first plate 141 may be electrically connected to the can 110.

On the first plate 141, a first welding part 141w may be formed. The first welding part 141w may be an area welded to the flag 170f of the electrode assembly 160. The first welding part 141w may have a curved shape, but this is only an example, and may be transformed into various shapes such as a straight shape, but is not limited thereto.

The second plate 142 may be in contact with (or connected to) the cap plate 120. For example, the second plate 142 may be welded to the cap plate 120. Specifically, in a state where an upper end of the second plate 142 is in contact with a lower end of the cap plate 120, an upper end of the cap plate 120 may be melted and solidified, so that the second plate 142 and the cap plate 120 are welded.

The second plate 142 may be electrically connected to the cap plate 120.

In an embodiment, in the second plate 142, at least one hole 142h may be formed. The hole 142h may be formed by penetrating through it. The number of holes 142h may be one or more. In an embodiment, in the cap plate 120, a hole that is connected to the hole 142h of the second plate 142 may be formed. An electrolyte may be injected into the inner space of the can 110 through the hole of the cap plate 120 and the hole 142h of the second plate 142.

In an embodiment, the second plate 142 may include an inner circumferential part with the hole 142h formed at the center, and an outer circumferential part located outside the inner circumferential part. The inner circumferential part may be a region surrounded by the outer circumferential part. The inner circumferential part may be formed in various shapes such as a square, a circle, an oval, etc. In the outer circumferential part, a second welding part 142w may be formed. The second welding part 142w may be a region welded to the cap plate 120. The second welding part 142w may have a straight shape, but this is only an example, and may be transformed into various shapes such as a curved shape, but is not limited thereto. The hole 142h may be formed in the inner circumferential part or outer circumferential part.

The connecting part 145 may connect the first plate 141 and the second plate 142. For example, the connecting part 145 may extend in the height direction (e.g., the Z-axis direction). In an embodiment, the connecting part 145 may extend in a state inclined with respect to the height direction (e.g., the Z-axis direction). In this case, the angle between the extension direction of the connecting part 145 and the height direction (e.g., the Z-axis direction) may be 0 degrees or more and less than 90 degrees. The first plate 141, the second plate 142, and the connecting part 145 may be formed integrally or formed separately.

In an embodiment, the distance (d2) between the second plate 142 and the reference location (R1) may be greater than the distance (d1) between the first plate 141 and the reference location (R1). In an embodiment, the reference location (R1) may be an end part of the electrode assembly 160 with respect to the height direction (e.g., the Z-axis direction). For example, the reference location (R1) may be an end part of the flag 170f. In other words, an open space may be formed between the second plate 142 and the electrode assembly 160. The impregnation property of the electrolyte may be improved through the open space.

In an embodiment, the cap plate 120 may include an insulating material. The insulating material may be inserted into the hole of the cap plate 120. The insulating material may include a material having low electrical conductivity, such as a polymer, ceramic, etc. The insulating material may correspond to at least a portion of a non-polar region 125.

In an embodiment, the cap plate 120 may include a polar region 121 and a non-polar region 125. The polar region 121 may be located outside the non-polar region 125. For example, the non-polar region 125 may be located at the center of the cap plate 120.

In an embodiment, the non-polar region 125 may include an insulating material that electrically separates it from the polar region 121. The insulating material may include a material with low electrical conductivity, such as a polymer, ceramic, etc. The polar region 121 may be a region through which current may flow, and the non-polar region 125 may be a region through which current may not flow. In an embodiment, the non-polar region 125 may protrude in the height direction (e.g., in the Z-axis direction) greater than the polar region 121.

In an embodiment, the polarity of each of the polar region 121 and the can 110 may be the same as the polarity of the flag 170f. For example, the polarity may be one of (+) and (-) and may indicate a direction in which current flows.

In an embodiment, the first current collector 140 may be in contact with (or connected to) the polarity region 121 of the cap plate 120. For example, the first current collector 140 may be welded to the polarity region 121 of the cap plate 120. Specifically, the second plate 142 of the first current collector 140 may be welded in a state of being in contact with the cap plate 120.

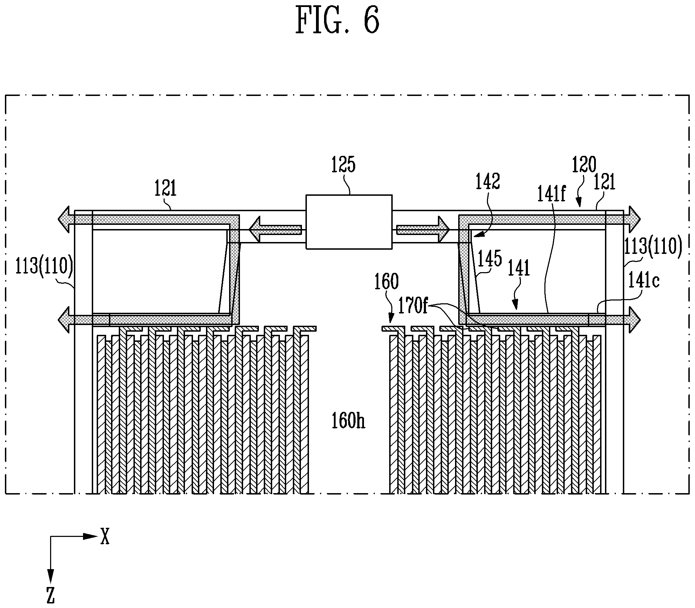

FIG. 6 is a diagram for explaining flow of heat within a battery cell according to an embodiment.

Referring to FIGS. 4 and 6, heat generated in the flag 170f according to an embodiment may be dissipated to the outside via the side part 113 of the can 110 through the first plate 141 of the first current collector 140. According to an embodiment of the present disclosure, heat generated from the flag 170f may be dissipated to the outside along the polar region 121 of the cap plate 120 through the first plate 141, the connecting part 145, and the second plate 142. According to an embodiment, heat may be generated in a region where current flows. By disposing the non-polar region 125 where current does not flow at the center, the distance over which the heat moves may be shortened, and the dissipation of the heat may be effectively controlled.

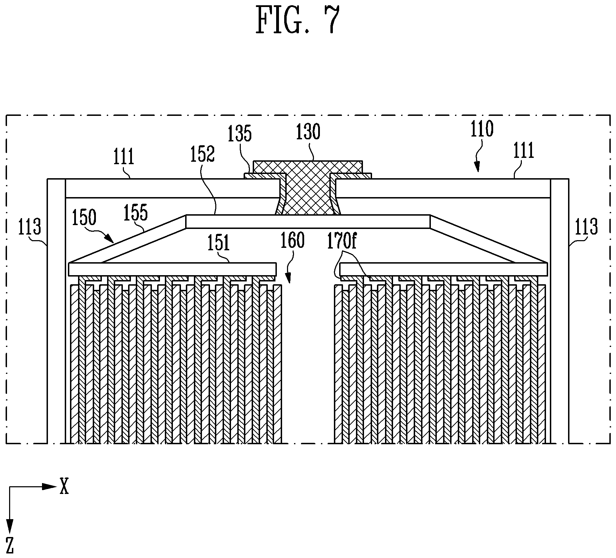

FIG. 7 is a diagram for explaining another part of a battery cell according to an embodiment. FIG. 7 illustrates an opposite portion in the height direction of the battery cell of FIG. 5.

Referring to FIG. 1 and FIG. 7, the battery cell 100 may include a can 110, a second current collector 150, and an electrode assembly 160. The electrode assembly 160 may be wound along a central axis. The electrode assembly 160 may include a separator and an electrode. The electrode may include a flag 170f. In an embodiment, the battery cell 100 may further include an electrolyte. The electrolyte may be, for example, a medium that transfers ions or current between the cathode and anode of the electrode assembly 160.

The second current collector 150 may be electrically connected to the flag 170f of the electrode 170. For example, referring to FIGS. 2 and 3 together, the second current collector 150 may be electrically connected to the second flag 175f of the second electrode 175. In an embodiment, the second current collector 150 may be electrically connected to the electrode terminal 130.

The second current collector 150 according to an embodiment may include a first plate 151, a second plate 152, and a connecting part 155. The connecting part 155 may connect the first plate 151 and the second plate 152. The first plate 151, the second plate 152, and the connecting part 155 may be electrically connected to each other.

The first plate 151 of the second current collector 150 may be welded to the flag 170f. The first plate 151 may be electrically connected to the flag 170f. For example, the first plate 151 may be welded to the second flag 175f and electrically connected.

The second plate 152 of the second current collector 150 may be welded to the electrode terminal 130. The second plate 152 may be electrically connected to the electrode terminal 130.

In an embodiment, the insulating gasket 135 may be disposed between the flat part 111 of the can 110 and the electrode terminal 130. The insulating gasket 135 may block contact between the electrode terminal 130 and the can 110. The insulating gasket 135 may electrically isolate the electrode terminal 130 and the can 110. In other words, the electrode terminal 130 and the can 110 may have different polarities. For example, if the polarity of the electrode terminal 130 is (+), the polarity of the can 110 may be (-).

## Claims

1. A battery cell comprising:
an electrode assembly in which an electrode comprising a flag and a separator are wound;
a can accommodating the electrode assembly;
a cap plate sealing the can; and
a current collector disposed between the cap plate and the electrode assembly and in contact with the flag, the can, and the cap plate, respectively.

2. The battery cell according to claim 1, wherein the cap plate comprises a non-polar region and a polar region located outside the non-polar region, and
the current collector is in contact with the polar region of the cap plate.

3. The battery cell according to claim 2, wherein the non-polar region comprises an insulating material that electrically separates it from the polar region.

4. The battery cell according to claim 2 or 3, wherein polarity of each of the polar region and the can is the same as polarity of the flag.

5. The battery cell according to any one of claims 1 to 4, wherein the current collector comprises:
a first plate in contact with the flag and the can, respectively;
a second plate in contact with the cap plate; and
a connecting part connecting the first plate and the second plate.

6. The battery cell according to claim 5, wherein a distance between the second plate and the electrode assembly is greater than a distance between the first plate and the electrode assembly.

7. The battery cell according to claim 5, wherein at least one hole is formed in the second plate.

8. The battery cell according to claim 5, wherein the second plate comprises an inner circumferential part with a hole formed at center, and an outer circumferential part located outside the inner circumferential part.

9. The battery cell according to claim 8, wherein the cap plate comprises an insulating material inserted into the hole.

10. The battery cell according to any one of claims 1 to 9, further comprising an electrode terminal located on an opposite side in a height direction from the cap plate.

11. The battery cell according to claim 10, wherein the electrode terminal is inserted into a penetration hole of the can.

12. The battery cell according to claim 10, further comprising an insulating gasket disposed between the can and the electrode terminal.
